# FASCICULE DE BREVET EUROPEEN

(11) **EP 0 791 555 B1**
(45) Date de publication et mention de la délivrance du brevet: **12.06.2002**
(21) Numéro de dépôt: 97400414.5
(22) Date de dépôt: 25.02.1997
(51) Int. Cl.: B68G 7/05, B60N 2/28, B29C 63/02, B29C 35/08

(54) **Procédé de fabrication d'un coussin recyclable pour siège et siège muni de ce coussin**
Verfahren zum Herstellen eines wiederverwertbaren Sitzkissens und Sitz ausgerüsted mit diesem Kissen
Method for producing a recyclable cushion and seat including this cushion

(30) Priorité: 26.02.1996 FR 9602358
(43) Date de publication de la demande: 27.08.1997
(73) Titulaire: FAURECIA SIEGES D'AUTOMOBILES S.A., 92100 Boulogne (FR)
(72) Inventeur: Baret, Frédéric, 45290 Nogent sur Vernisson (FR); Fourrey, François, 45290 Nogent sur Vernisson (FR); Laporte, Pierre, 45290 Nogent sur Vernisson (FR); Rosset, Véronique, 45290 Nogent sur Vernisson (FR)
(74) Mandataire: Burbaud, Eric

(56) Documents cités:
- EP-A- 0 514 003
- EP-A- 0 708 191
- WO-A-92/08601
- US-A- 4 851 070
- US-A- 5 254 197
- US-A- 5 298 321
- PATENT ABSTRACTS OF JAPAN vol. 018, no. 154 (M-1577), 15 Mars 1994 & JP 05 329938 A (ARACO CORP), 14 Décembre 1993,
- PATENT ABSTRACTS OF JAPAN vol. 018, no. 037 (M-1545), 20 Janvier 1994 & JP 05 269853 A (ARACO CORP), 19 Octobre 1993,

## Description

La présente invention concerne un procédé de fabrication d'un coussin recyclable pour siège et un siège muni de ce coussin

Elle s'applique en particulier à la fabrication d'un siège pour véhicule automobile.

EP-A-0 708 191, qui est une demande de brevet européen déposée le 8 août 1995 et publiée le 24 avril 1996, décrit un procédé de fabrication d'un coussin recyclable pour siège comprenant un rembourrage revêtu d'une coiffe, le procédé étant du type dans lequel on place l'ensemble rembourrage-coiffe dans un moule, et on colle la coiffe sur le rembourrage par pressage de l'ensemble dans le moule et chauffage de cet ensemble.

Pour permettre le recyclage du coussin, le rembourrage et la coiffe sont fabriqués dans des matériaux synthétiques thermoplastiques de la même famille chimique. En particulier, le rembourrage est constitué de fibres synthétiques thermoplastiques, notamment de fibres de polyester.

Le chauffage de l'ensemble rembourrage-coiffe est réalisé dans le moule au moyen d'air chaud.

Or, un tel procédé classique de chauffage est susceptible de produire, notamment par mauvaise répartition de l'air chaud, un effet de "cartonnage" caractérisé par une formation de croûtes relativement dures dans certaines zones d'adhérence de la coiffe au rembourrage. Ces croûtes nuisent au confort du siège.

De plus, ce procédé de chauffage ne permet pas une maîtrise satisfaisante de la température dans le coussin, cette température devant être suffisamment élevée pour permettre une bonne adhérence de la coiffe sur le rembourrage, sans être toutefois trop élevée pour ne pas détruire la structure du rembourrage en fibres.

Le document US-A-5,298,321 décrit notamment un siège de véhicule constitué à partir de fibres polyester, recyclable par fusion sans nécessiter de séparer la coiffe du rembourrage, dont la fabrication met également en oeuvre une opération de chauffage par gaz chaud dans le moule.

Par ailleurs, le document US-A-5,254,197 décrit un procédé de collage, appliqué en particulier à la fabrication de sièges automobiles, d'une coiffe sur un rembourrage en mousse par mouillage et chauffage par micro-ondes.

L'invention a pour but de proposer un coussin recyclable pour siège, facile à fabriquer par des moyens automatiques, confortable et susceptible d'évacuer convenablement la transpiration exhalée par un utilisateur du siège.

A cet effet, l'invention a pour objet un procédé de fabrication suivant la revendication 1.

D'autres caractéristiques de ce procédé sont conformes aux revendications 2 à 6.

L'invention a également pour objet un siège suivant la revendication 7.

D'autres caractéristiques de ce siège sont conformes aux revendications 8 à 10.

L'invention sera mieux comprise à la lecture de la description qui va suivre donnée uniquement à titre d'exemple et faite en se référant aux dessins annexés dans lesquels :
- la figure 1 est une vue en coupe éclatée d'un coussin selon l'invention ;
- la figure 2 est une vue en coupe du coussin représenté sur la figure 1 ;
- la figure 3 est une vue en perspective, en coupe avec des arrachements, du coussin représenté à la figure 1 ;
- la figure 4 est une vue en perspective d'un siège selon l'invention.

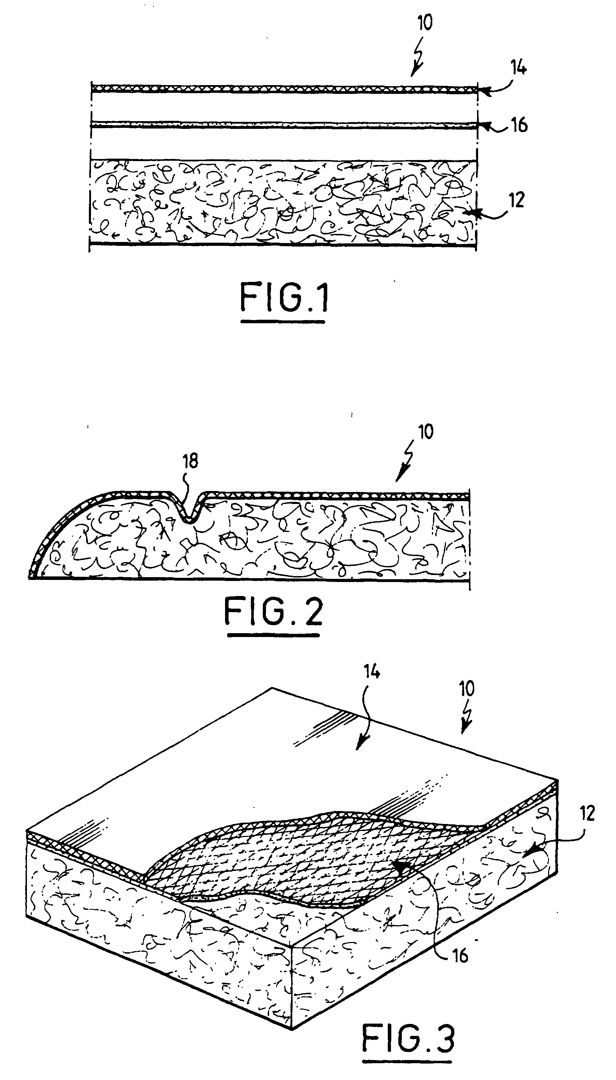

On a représenté sur les figures 1 à 3 un coussin 10 pour siège notamment de véhicule automobile.

Le coussin 10 comprend un rembourrage 12 revêtu d'une coiffe 14 et une couche de colle 16 interposée entre le corps 12 et la coiffe 14.

Afin de faciliter le recyclage du siège et du coussin 10, le rembourrage 12, la coiffe 14 et la couche de colle 16 sont fabriqués dans des matériaux synthétiques thermoplastiques de la même famille chimique, le rembourrage 12 et la coiffe 14 étant réalisés en fibres.

De cette façon, la totalité du coussin peut être recyclée dans une seule filière de traitement.

De préférence, la famille chimique est celle des polyesters. Les matériaux synthétiques, notamment ceux constituant le rembourrage 12, comprennent par exemple, du poly(téréphtalate de butylène) et/ou du poly(téréphtalate d'éthylène) pris séparément ou mélangés entre eux.

Le rembourrage 12 est réalisé de préférence au moyen de fibres en polyester cardées, assemblées sous forme de matelas, éventuellement aiguilletées puis calandrées et chauffées dans un four classique pour établir des liaisons entre les fibres par fusion partielle de certaines de ces fibres.

La coiffe 14 est fabriquée par exemple par tissage ou tricotage de fils en fibres de polyester, ou par toute autre méthode d'assemblage de fils.

La couche de colle 16 est constituée par exemple d'une nappe en polyester. Cette nappe peut être pleine de manière à former un film, ou ajourée de manière à former un voile comme cela est illustré sur la figure 3.

En variante, la couche de colle peut être pulvérisée ou enduite sur l'une des faces en regard du rembourrage 12 et de la coiffe 14.

On notera que la température de fusion de la couche de colle 16 est inférieure à celles du rembourrage 12 et de la coiffe 16. A titre d'exemple, la température de fusion de la couche de colle 16 est d'environ 100° à 130°C et celles du rembourrage 12 et de la coiffe 16 sont d'environ 160° à 180°C.

On décrira ci-dessous le procédé de fabrication selon l'invention du coussin 10.

Initialement, on interpose la couche de colle 16 entre le rembourrage 12 et la coiffe 14.

Ensuite, on place l'ensemble rembourrage 12-couche de colle 16-coiffe 14 dans un moule classique destiné à donner la forme souhaitée au coussin.

Le moule permet de former à la surface du coussin des saillies ou des creux 18, comme cela est représenté sur la figure 2. On notera que le creux 18 représenté sur cette figure a une forme générale de rainure imitant une ligne de rappel de coiffe.

Afin de faciliter et réguler les échanges thermiques ultérieurs dans le coussin, on mouille l'ensemble rembourrage 12-couche de colle 16-coiffe 14, avant ou après avoir placé cet ensemble dans le moule. Le mouillage est réalisé, par exemple, par trempage dans l'eau d'au moins une partie de l'ensemble ou pulvérisation d'eau sur le rembourrage ou la coiffe.

Puis, on réalise simultanément la conformation du rembourrage 12, suivant un profil défini par le moule, et le collage de la coiffe 14 sur le rembourrage 12 par pressage dans le moule de l'ensemble rembourrage 12-couche de colle 16-coiffe 14 et chauffage de cet ensemble.

Le chauffage est réalisé en soumettant l'ensemble rembourrage 12-couche de colle 16-coiffe 14 à un rayonnement électromagnétique de fréquence appartenant à la gamme des hautes fréquences ou des hyperfréquences (micro-ondes).

La fréquence du rayonnement est choisie par exemple parmi les hautes fréquences égales à 13,56 MHz +/- 0,05%, 27,17 MHz +/- 0,6%, 40,68 MHz +/- 0,05% et l'hyperfréquence égale à 2,456 GHz +/- 50 MHz.

D'autres hautes fréquences ou hyperfréquences peuvent être utilisées selon les disponibilités de fréquences définies par les législations nationales.

Dans le cas d'utilisation d'un rayonnement haute fréquence, le moule comprend deux parties en matériau conducteur amagnétique tel que l'aluminium, le cuivre ou l'acier inoxydable. Le moule est relié à un générateur de courant haute fréquence.

On notera que, du fait qu'au niveau d'un creux du coussin les parties du moule en vis-à-vis sont proches l'une de l'autre, le rayonnement électromagnétique est plus intense au niveau de ce creux ce qui permet d'obtenir à cet endroit une très bonne adhérence de la coiffe sur le rembourrage.

Dans le cas d'utilisation d'un rayonnement hyperfréquence, le moule comprend par exemple deux parties en matériau non-conducteur tel que le téflon qui est perméable aux rayonnements.

On notera que, du fait de leur faible longueur d'onde, les hyperfréquences ne peuvent chauffer de façon efficace et homogène que des coussins de dimensions relativement faibles. Le mode de réalisation concernant les hyperfréquences n'est pas couvert par les revendications mais fait partie de l'état de la technique et est utile à la compréhension de l'invention. Dans le cas des coussins de dimensions normales, utilisés habituellement pour recouvrir une assise ou un dossier de siège de véhicule automobile, il est nécessaire d'utiliser des hautes fréquences pour obtenir un chauffage efficace et homogène.

Lors du chauffage, l'eau a un double effet.

En effet, le rayonnement électromagnétique chauffe tout d'abord l'eau dont est imprégné le coussin. L'échauffement de l'eau permet de chauffer les fibres thermoplastiques et d'augmenter ainsi leurs constantes diélectriques (premier effet de l'eau) afin de les rendre sensibles au rayonnement électromagnétique et amorcer ainsi leur fusion.

Par ailleurs, l'eau permet de réguler la température des fibres (second effet de l'eau) afin d'éviter un échauffement de ces fibres trop important conduisant à la fusion complète des fibres qui se traduirait par l'effondrement de la structure du rembourrage.

L'écart entre les températures de fusion de la couche de colle et des fibres permet de réaliser un collage de la coiffe sur le rembourrage sans chauffer les fibres de façon excessive et dommageable pour la structure du rembourrage.

Pour un coussin de volume normal destiné à un siège de véhicule automobile, l'ensemble rembourrage-couche de colle-coiffe est chauffé pendant une durée qui peut aller selon le cas d'environ 20 secondes à quelques minutes.

On constate que le chauffage par rayonnement haute fréquence ou hyperfréquence permet d'éviter le "cartonnage" ou la formation de croûtes relativement dures dans les zones les plus fortement comprimées du coussin 10, par exemple dans le creux 18 de ce coussin.

L'invention comporte de nombreux avantages.

Le coussin obtenu par le procédé selon l'invention est poreux et peut ainsi assurer un bon drainage de la transpiration exhalée par un utilisateur en contact avec ce coussin.

Le procédé selon l'invention permet de réaliser un coussin ayant une forme complexe présentant des saillies et des creux variés. Ainsi, les exigences de plus en plus nombreuses en matière de style des coussins d'un siège, dans le domaine automobile, peuvent être satisfaites, ceci sans former sur les coussins des durcissements localisés préjudiciables au confort.

Par ailleurs, le procédé selon l'invention est rapide, simple, économique et facile à réaliser avec des moyens automatiques.

L'homogénéité des matériaux thermoplastiques constituant le coussin selon l'invention rend les opérations de recyclage d'un siège muni de ce coussin très simples et économiques.

Dans le cas d'un siège de véhicule automobile comportant une armature métallique sur laquelle est accroché un coussin selon l'invention, le recyclage de ce siège se fait très facilement en séparant le coussin de l'armature et en traitant ces armature et coussin dans deux filières adéquates respectives.

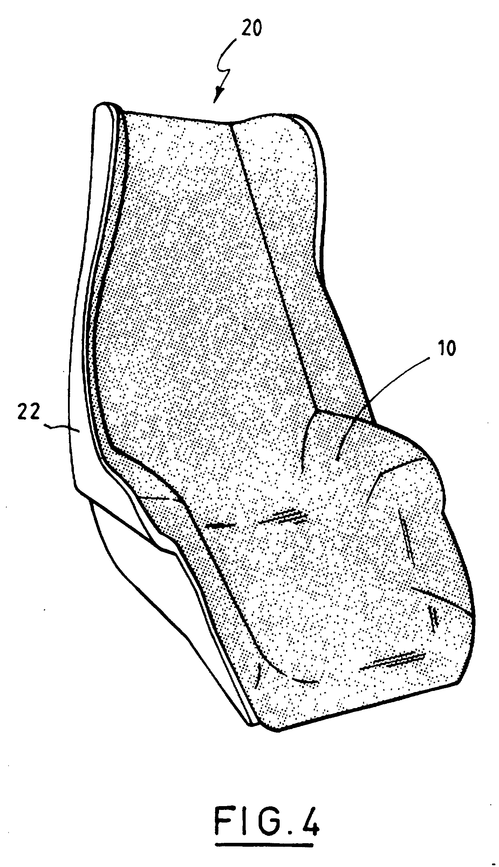

Sur la figure 4, on a représenté un siège 20 pour enfant destiné à être installé dans un habitacle de véhicule automobile.

Ce siège 20 comprend un coussin 10 tel qu'illustré sur les figures 1 à 3 porté par une armature en forme de coque 22 fabriquée dans un matériau synthétique thermoplastique de la même famille chimique que celle des matériaux du coussin.

De préférence, la famille chimique est celle des polyesters.

Dans le cas illustré sur la figure 4, la totalité du siège peut être recyclée dans une seule filière.

On notera que les caractéristiques mécaniques des polyesters sont particulièrement bien adaptées pour la fabrication de la coque du siège. Par ailleurs, les caractéristiques des fibres de polyesters, notamment leur bonne résilience ainsi que leur bonne aptitude à l'impression ou à la teinture, sont bien adaptées à la fabrication du rembourrage et de la coiffe du coussin.

On notera également que les polyesters constituant le coussin sont bien adaptés au drainage de la transpiration exhalée par un utilisateur.

## Revendications

1. Procédé de fabrication d'un coussin recyclable (10) pour siège comprenant un rembourrage (12) revêtu d'une coiffe (14), le rembourrage (12) et la coiffe (14) étant en fibres synthétiques thermoplastiques de la même famille chimique, **caractérisé en ce que** :
- on interpose, entre le rembourrage (12) et la coiffe (14), une couche de colle (16) en matériau synthétique thermoplastique de la même famille chimique que celle du rembourrage (12) et de la coiffe (14), dont la température de fusion est inférieure à celles du rembourrage (12) et de la coiffe (14),
- on place l'ensemble rembourrage (12)-couche de colle (16)-coiffe (14) dans un moule, et
- on réalise simultanément, d'une part, la conformation du rembourrage (12), suivant un profil défini par le moule, et d'autre part, le collage de la coiffe (14) sur le rembourrage (12), par pressage et chauffage dans le moule de l'ensemble rembourrage (12)-couche de colle (16)-coiffe (14) après avoir préalablement mouillé cet ensemble, le chauffage étant réalisé en soumettant l'ensemble à un rayonnement électromagnétique de fréquence appartenant à la gamme des hautes fréquences.

2. Procédé selon la revendication 1, **caractérisé en ce que** la fréquence du rayonnement est choisie parmi les hautes fréquences égales à 13,56 MHz +/- 0,05%, 27,17 MHz +/- 0,6%, 40,68 MHz +/- 0,05%.

3. Procédé selon la revendication 1 ou 2, **caractérisé en ce que** la famille chimique est celle des polyesters.

4. Procédé selon la revendication 3, **caractérisé en ce que** les matériaux synthétiques comprennent du poly(téréphtalate de butylène) et/ou du poly(téréphtalate d'éthylène) pris séparément ou mélangés entre eux.

5. Procédé selon l'une quelconque des revendications 1 à 4, **caractérisé en ce que** la couche de colle (16) est constituée d'une nappe éventuellement ajourée.

6. Procédé selon l'une quelconque des revendications 1 à 4, **caractérisé en ce que** la couche de colle (16) est pulvérisée ou enduite sur au moins l'une des faces en regard du rembourrage (12) et de la coiffe (14).

7. Siège comportant un coussin recyclable comprenant un rembourrage (12) revêtu d'une coiffe (14) et une couche de colle (16) interposée entre le rembourrage (12) et la coiffe (14), **caractérisé en ce que** le rembourrage (12), la couche de colle (16) et la coiffe (14) sont fabriqués dans des matériaux synthétiques thermoplastiques de la même famille chimique, le rembourrage (12) et la coiffe (14) étant réalisés en fibres, le siège comprenant de plus une armature en forme de coque fabriquée dans un matériau synthétique thermoplastique de la même famille chimique que celle des matériaux du coussin.

8. Siège selon la revendication 7, **caractérisé en ce que** la famille chimique est celle des polyesters.

9. Siège selon la revendication 8, **caractérisé en ce que** les matériaux synthétiques comprennent du poly(téréphtalate de butylène) et/ou du poly(téréphtalate d'éthylène) pris séparément ou mélangés entre eux.

10. Siège selon l'une quelconque des revendications 7 à 9, **caractérisé en ce que** la colle a une température de fusion inférieure à celles du rembourrage et de la coiffe.

## Patentansprüche

1. Verfahren zur Herstellung eines wiederverwertbaren Sitzkissens (10), das eine Polsterung (12) umfasst, die mit einem Bezug (14) versehen ist, wobei die Polsterung (12) und der Bezug (14) aus synthetischen Thermoplastfasern der gleichen chemischen Familie bestehen, **dadurch gekennzeichnet, dass**:
- zwischen der Polsterung (12) und dem Bezug (14) eine Schicht aus Kleber (16) aus synthetischem Thermoplastmaterial der gleichen chemischen Familie wie derjenigen der Polsterung (12) und des Bezugs (14) vorgesehen wird, dessen Schmelztemperatur unter denjenigen der Polsterung (12) und des Bezugs (14) liegt,
- die Einheit aus Polsterung (12) - Kleberschicht (16) - Bezug (14) in einer Gussform angeordnet wird, und
- gleichzeitig einerseits die Formgebung der Polsterung (12) entsprechend einem von der Gussform definierten Profil und andererseits das Kleben des Bezugs (14) auf die Polsterung (12) durch Pressen und Erwärmen der Einheit aus Polsterung (12) - Kleberschicht (16) - Bezug (14) erfolgt, nachdem das Ganze vorab befeuchtet wurde, wobei das Erwärmen erfolgt, indem die Einheit elektromagnetischer Strahlung mit einer Frequenz ausgesetzt wird, die zum Bereich der hohen Frequenzen gehört.

2. Verfahren nach Anspruch 1, **dadurch gekennzeichnet, dass** die Frequenz der Strahlung unter den hohen Frequenzen gleich 13,56 MHz ± 0,05 %, 27,17 MHz ± 0,5 %, 40,68 MHz ± 0,05 % ausgewählt wird.

3. Verfahren nach Anspruch 1 oder 2, **dadurch gekennzeichnet, dass** die chemische Familie diejenige der Polyester ist.

4. Verfahren nach Anspruch 3, **dadurch gekennzeichnet, dass** die synthetischen Materialien Poly(Butenterephthalat) und/oder Poly(Ethylenterephthalat) umfassen, die getrennt oder miteinander vermischt genommen werden.

5. Verfahren nach einem der Ansprüche 1 bis 4, **dadurch gekennzeichnet, dass** die Kleberschicht (16) aus einer eventuell durchbrochenen Schicht besteht.

6. Verfahren nach einem der Ansprüche 1 bis 4, **dadurch gekennzeichnet, dass** die Kleberschicht (16) auf zumindest eine der Seiten aufgesprüht oder aufgetragen wird, die sich gegenüber der Polsterung (12) und dem Bezug (14) befinden.

7. Sitz mit einem wiederverwertbaren Kissen mit einer mit einem Bezug (14) bezogenen Polsterung (12) und einer Kleberschicht (16), die zwischen der Polsterung (12) und dem Bezug (14) vorgesehen ist, **dadurch gekennzeichnet, dass** die Polsterung (12), die Kleberschicht (16) und der Bezug (16) aus synthetischen Thermoplasten der gleichen chemischen Familie bestehen, wobei der Sitz ferner einen Beschlag in Form einer Schale umfasst, die aus einem synthetischen Thermoplastmaterial der gleichen chemischen Familie wie derjenigen der Materialien des Kissens gefertigt ist.

8. Sitz nach Anspruch 7, **dadurch gekennzeichnet, dass** die chemische Familie diejenige der Polyester ist.

9. Sitz nach Anspruch 8, **dadurch gekennzeichnet, dass** die synthetischen Materialien Poly(Butenterephthalat) und/oder Poly(Ethylenterephthalat) umfassen, die getrennt oder miteinander vermischt genommen werden.

10. Sitz nach einem der Ansprüche 7 bis 9, **dadurch gekennzeichnet, dass** der Kleber eine Schmelztemperatur hat, die unter derjenigen der Polsterung des Bezugs liegt.

## Claims

1. A method of manufacturing a recyclable cushion (10) for a seat, comprising a stuffing (12) covered with a cover (14), the stuffing (12) and the cover (14) comprising synthetic thermoplastic fibres from the same chemical family, **characterised in that**:
- a layer of glue (16), comprising a synthetic thermoplastic material from the same chemical family as that of the stuffing (12) and the cover (14), is interposed between the stuffing (12) and the cover (14), the melting point of the layer of glue (16) being lower than the melting points of the stuffing (12) and the cover (14);
- the assembly comprising the stuffing (12), the layer of glue (16) and the cover (14) is placed into a mould; and
- the stuffing (12) is shaped in accordance with a profile defined by the mould, and the cover (14) is simultaneously glued to the stuffing (12), by pressing and heating the assembly comprising the stuffing (12), the layer of glue (16) and the cover (14) in the mould after first wetting this assembly, heating being carried out by subjecting the assembly to electromagnetic radiation of a frequency falling within the high-frequency range.

2. A method according to claim 1, **characterised in that** the frequency of the radiation is selected from the high frequencies equal to 13.56 MHz +/- 0.05%, 27.17 MHz +/- 0.5%, 40.68 MHz +/- 0.05%.

3. A method according to claim 1 or 2, **characterised in that** the chemical family is that of the polyesters.

4. A method according to claim 3, **characterised in that** the synthetic materials comprise poly(butyleneterephthalate) and/or poly(ethyleneterephthalate) separately or mixed together.

5. A method according to any one of claims 1 to 4, **characterised in that** the layer of glue (16) is formed by an optionally perforated sheet.

6. A method according to any one of claims 1 to 4, **characterised in that** the layer of glue (16) is sprayed or coated on at least one of the surfaces facing the stuffing (12) and the cover (14).

7. A seat comprising a recyclable cushion comprising a stuffing (12) covered with a cover (14) and a layer of glue (16) interposed between the stuffing (12) and the cover (14), **characterised in that** the stuffing (12), the layer of glue (16) and the cover (14) are made of synthetic thermoplastic materials from the same chemical family, the stuffing (12) and the cover (14) comprising fibres, and the seat additionally comprising a frame in the form of a shell made of a synthetic thermoplastic material from the same chemical family as that of the cushion materials.

8. A seat according to claim 7, **characterised in that** the chemical family is that of the polyesters.

9. A seat according to claim 8, **characterised in that** the synthetic materials comprise poly(butyleneterephthalate) and/or poly(ethyleneterephthalate) separately or mixed together.

10. A seat according to any one of claims 7 to 9, **characterised in that** the glue has a melting point lower than the melting points of the stuffing and the cover.
